# EUROPEAN PATENT APPLICATION

(11) **EP 4 510 730 A1**
(43) Date of publication of application: **19.02.2025**
(21) Application number: 22936918.6
(22) Date of filing: 14.04.2022
(51) Int. Cl.: H04W 72/04

(54) **RESOURCE CONFIGURATION METHOD AND DEVICE**

(71) Applicant: Beijing Xiaomi Mobile Software Co., Ltd., Beijing 100085 (CN)
(72) Inventor: ZHAO, Wensu, Beijing 100085 (CN); ZHAO, Qun, Beijing 100085 (CN)
(74) Representative: Stöckeler, Ferdinand
(86) International application number: PCT/CN2022/086926
(87) International publication number: WO 2023/197270

(57) **Abstract**

Embodiments of the present application disclose a resource configuration method and device, which can be applied to an unlicensed frequency band of a terminal sidelink, and can be applied to Internet of Vehicles, V2X and V2V system and the like. The method comprises: mapping an interlaced resource block to at least one resource pool, and determining the configuration information of each of the at least one resource pool, wherein the configuration information of each resource pool indicates the number and positions of the interlaced resource block indexes configured for the corresponding resource pool, and the numerical value of the resource blocks separating two continuous interlaced resource blocks in the same interlaced resource block index is M, M being determined by the size of a subcarrier interval. The embodiments of the present application can be implemented to satisfy an OCB requirement on the unlicensed frequency band of the terminal sidelink, thereby meeting the potentially diversified application scenarios and requirements in the future.

## Description

### TECHNICAL FIELD

The disclosure relates to a field of communication technologies, in particular to a resource configuration method and device.

### BACKGROUND

At present, with the continuous emergence of various new services and new application demands, direct communication (also called side-link (SL)) between terminals may have higher and higher performance requirements on transmission width, communication speed range, communication delay, reliability, scalability, etc. If only depends on the operators' limited licensed spectrum, it may not be able to meet demands of future diversified application scenarios. Therefore, it is necessary to study sidelink-unlicensed (SL-U) technology.

On an unlicensed frequency band, Occupied Channel Bandwidth (OCB, the occupied bandwidth for transmitting signals on unlicensed spectrum) requirement needs to be met, i.e., each transmission needs to occupy 80% of the bandwidth (e.g., 20MHz) of each Listen before Talk (LBT) sub-band.

However, currently, there is still a lack of effective means to configure resource pools on the LBT sub-band in the SL-U system.

### SUMMARY

Embodiments of the disclosure provide a resource configuration method and device, which can be applied to the Internet of Vehicles, such as vehicle to everything (V2X) communication, long term evolution-vehicle (LTE-V), and vehicle to vehicle (V2V) communication, or can be used in the fields of intelligent driving, intelligent networked vehicles, etc. By designing a mapping mode between resource pools and Interlaced Resource Block (IRB) indexes, resource configuration of resource pools can be realized, so that the OCB requirement can be met on the sidelink-unlicensed frequency band on a terminal side, and demands of future diversified application scenarios can be met.

In a first aspect, embodiments of the disclosure provide a resource configuration method. The method is performed by a network device, is provided. The method includes:
mapping IRBs to at least one resource pool, and determining configuration information of each resource pool in the at least one resource pool;
in which the configuration information of each resource pool indicates a number of and positions of IRB indexes configured for the corresponding resource pool, and two consecutive IRBs in the same IRB index are separated by M resource blocks, M being determined by a size of subcarrier spacing.

In this technical solution, the IRBs are allocated to one or more resource pools and configuration information of each resource pool is generated. The configuration information of each resource pool indicates a number of and positions of IRB indexes configured for the corresponding resource pool. It can be seen that in the disclosure, by providing a mapping mode between the resource pool and the IRB index, resource configuration of resource pools can be realized, so that the OCB requirement can be met on the SL-U frequency band on the terminal side, and demands of future diversified application scenarios can be met.

In an implementation, mapping the IRBs to the at least one resource pool, includes: determining a number of IRB indexes included in one resource pool and positions of the IRB indexes according to a mapping rule between the IRB index and the resource pool; and mapping the IRBs to at least one resource pool according to the number of IRB indexes included in the one resource pool and the positions of the IRB indexes.

In a possible implementation, the mapping rule between the IRB index and the resource pool is: mapping one resource pool to N1 consecutive or non-consecutive IRB indexes in one listen-before-talk (LBT) sub-band, in which N1 is a positive integer less than or equal to M.

In a possible implementation, mapping one resource pool to the N1 consecutive or non-consecutive IRB indexes in one LBT sub-band, includes: starting from the first IRB index in the one LBT sub-band, mapping N1 consecutive or non-consecutive IRB indexes to corresponding resource pools one by one according to logical numbers where the IRB indexes are located, in which N1 is an integer less than M.

In a possible implementation, the configuration information of each resource pool includes a bitmap of length M, each bit in the bitmap corresponds to one IRB index, a bit value 1 in the bitmap is used to indicate mapping to a corresponding resource pool, and a bit value 0 in the bitmap is used to indicate not mapping to the corresponding resource pool.

In a possible implementation, the mapping rule between the IRB index and the resource pool is: mapping one resource pool to N1 consecutive or non-consecutive IRB indexes in one LBT sub-band, in which the configuration information of each resource pool includes indication information that indicates a starting IRB index and a number of consecutive IRB indexes configured for the corresponding resource pool.

In an implementation, the one resource pool includes X sub-channels, X being a positive integer, and mapping one resource pool to the N1 consecutive or non-consecutive IRB indexes in one LBT sub-band, includes: mapping the X sub-channels to the N1 IRB indexes, in which the mapping rule between the sub-channel and the IRB index is: starting from the first IRB index mapped by the one resource pool, mapping N1 IRB indexes to sub-channels in the resource pool according to logical numbers where the IRB indexes are located.

In an implementation, mapping the one resource pool to the N1 consecutive or non-consecutive IRB indexes in the one LBT sub-band, includes: mapping the one resource pool to M IRB indexes in the one LBT sub-band, in which N1 is equal to M.

In an implementation, the mapping rule between the IRB index and the resource pool is: mapping one resource pool to N2 consecutive or non-consecutive IRB indexes in one LBT sub-band, in which N2 is a non-integer greater than 1 and less than M.

In a possible implementation, mapping the one resource pool to the N2 consecutive or non-consecutive IRB indexes in the one LBT sub-band, includes: starting from the first IRB index in the one LBT sub-band, mapping the N2 consecutive or non-consecutive IRB indexes one by one to corresponding resource pools according to logical numbers where the IRB indexes are located, in which the N2 IRB indexes include: the first IRB index to the Lth IRB index, and l IRBs in the (L+1)th IRB index, L being an integer obtained by downward rounding N2, and a value of *l* being based on a relation between a fractional part of N2 and M.

In a possible implementation, the one resource pool includes X sub-channels, X being a positive integer, and mapping the resource pool to the N2 consecutive or non-consecutive IRB indexes in the LBT sub-band, includes: mapping X sub-channels in the resource pool to the N2 IRB indexes, in which the mapping rule between the sub-channel and the IRB index is: starting from the first IRB index mapped by the one resource pool, mapping N2 IRB indexes to sub-channels in the resource pool according to logical numbers where the IRB indexes are located.

In an implementation, the mapping rule between the IRB index and the resource pool is: mapping one resource pool to N3 IRB indexes in a plurality of LBT sub-bands, in which N3 is an integer greater than M, and the one resource pool is consecutively or non-consecutively mapped to IRB indexes with the same serial numbers in each LBT sub-band.

In a possible implementation, the configuration information of each resource pool includes sub-band indication information and IRB index indication information, the sub-band indication information is used to indicate a plurality of LBT sub-bands mapped by the corresponding resource pool, and the IRB index indication information is used to indicate IRB indexes mapped by the corresponding resource pool in each LBT sub-band.

In an implementation, the mapping rule between the IRB index and the resource pool is: mapping one resource pool to N3 IRB indexes in a plurality of LBT sub-bands, in which N3 is an integer greater than M, and the resource pool is mapped to IRB indexes with different serial numbers in each LBT sub-band.

In a possible implementation, the configuration information of each resource pool includes indication information, in which the indication information is used to indicate logical numbers where IRB indexes mapped by the corresponding resource pool are located; or the configuration information of each resource pool includes sub-band indication information and IRB index indication information, in which the sub-band indication information is used to indicate a plurality of LBT sub-bands mapped by the corresponding resource pool, and the IRB index indication information is used to indicate IRB indexes mapped by the corresponding resource pool to each LBT sub-band.

In a second aspect, embodiments of the disclosure provide a resource configuration method. The method is performed by a terminal device. The method includes:
receiving resource pool configuration information sent by a network device;
in which the resource pool configuration information indicates a number of and positions of IRB indexes configured for a corresponding resource pool, and two consecutive IRBs in the same IRB index are separated by M resource blocks, M being determined by a size of subcarrier interval.

According to a third aspect of embodiments of the disclosure, a communication device is provided. The communication device has the ability to implement part or all of the functions of the network device in the method described in the first aspect. For example, the communication device may have the functions of some or all of the embodiments of the disclosure, or may have the function of independently implementing any embodiment of the disclosure. The functions can be implemented by hardware, or can be implemented by executing corresponding software using the hardware. The hardware or software includes one or more units or modules corresponding to the above functions.

In an implementation, the communication device includes: a transceiver module and a processing module. The processing module is configured to support the communication device to perform corresponding functions in the above methods. The transceiver module is configured to support communication between the communication device and other devices. The communication device may further include a storage module coupled to the transceiver module and the processing module, which is configured to store necessary computer programs and data for the communication device.

As an example, the processing module may be a processor. The transceiver module may be a transceiver or a communication interface. The storage module may be a memory.

In an implementation, the processing module is configured to map IRBs to at least one resource pool.

The processing module is further configured to determine configuration information of each resource pool in the at least one resource pool.

The configuration information of each resource pool indicates a number of and positions of IRB indexes configured for the corresponding resource pool, and two consecutive IRBs in the same IRB index are separated by M resource blocks, M being determined by a size of subcarrier spacing.

In an implementation, the processing module includes:
a determining unit, configured to determine a number of IRB indexes included in each resource pool and positions of the IRB indexes according to a mapping rule between the IRB index and the resource pool; and
a mapping unit, configured to map the IRBs to at least one resource pool according to the number of IRB indexes included in the resource pool and the positions of the IRB indexes.

In an implementation, the determining unit is further configured to: determine to map one resource pool to N1 consecutive or non-consecutive IRB indexes in one LBT sub-band according to the mapping rule between the IRB index and the resource pool, in which N1 is a positive integer less than or equal to M.

The mapping unit is further configured to map the IRBs to at least one resource pool by mapping one IRB to N1 consecutive or non-consecutive IRB indexes in one LBT sub-band.

In an implementation, the mapping unit is further configured to: starting from the first IRB index in the one LBT sub-band, map N1 consecutive or non-consecutive IRB indexes to corresponding resource pools one by one according to logical numbers where the IRB indexes are located, in which N1 is less than M.

In a possible implementation, the configuration information of each resource pool includes a bitmap of length M, each bit in the bitmap corresponds to one IRB index, a bit value 1 in the bitmap is used to indicate mapping to a corresponding resource pool, and a bit value 0 in the bitmap is used to indicate not mapping to the corresponding resource pool.

In a possible implementation, the determining unit is further configured to: determine to map one resource pool to N1 consecutive IRB indexes in one LBT sub-band, N1 being an integer, in which the configuration information of each resource pool includes indication information that indicates a starting IRB index and a number of consecutive IRB indexes configured for the corresponding resource pool.

In a possible implementation, the one resource pool includes X sub-channels, X being a positive integer, and the determining unit is further configured to: determine to map the X sub-channels in the one resource pool to N1 IRB indexes, in which the mapping rule between the sub-channel and the IRB index is: starting from the first IRB index mapped by the one resource pool, mapping N1 IRB indexes to sub-channels in the one resource pool according to logical numbers where the IRB indexes are located.

In a possible implementation, the determining unit is further configured to: determine to map the one resource pool to M IRB indexes in the one LBT sub-band, in which N1 is equal to M.

In a possible implementation, the determining unit is further configured to: determine to map one resource pool to N2 consecutive or non-consecutive IRB indexes in one LBT sub-band, in which N2 is a non-integer greater than 1 and less than M.

In a possible implementation, the determining unit is further configured to: starting from the first IRB index in the one LBT sub-band, determine to map the N2 consecutive or non-consecutive IRB indexes one by one to corresponding resource pools according to logical numbers where the IRB indexes are located, in which the N2 IRB indexes include: the first IRB index to the Lth IRB index, and l IRBs in the (L+1)^{th} IRB index, L being an integer obtained by downward rounding N2, and a value of *l* being based on a relation between a fractional part of N2 and M.

In a possible implementation, the one resource pool includes X sub-channels, X being a positive integer, and the determining unit is further configured to: determine to map X sub-channels in the one resource pool to the N2 IRB indexes, in which the mapping rule between the sub-channel and the IRB index is: starting from the first IRB index mapped by the one resource pool, mapping N2 IRB indexes to sub-channels in the resource pool according to logical numbers where the IRB indexes are located.

In a possible implementation, the determining unit is further configured to: determine to map one resource pool to N3 IRB indexes in a plurality of LBT sub-bands, in which N3 is an integer greater than M, and the one resource pool is consecutively or non-consecutively mapped to IRB indexes with the same serial numbers in each LBT sub-band.

In a possible implementation, the configuration information of each resource pool includes sub-band indication information and IRB index indication information, the sub-band indication information is used to indicate a plurality of LBT sub-bands mapped by the corresponding resource pool, and the IRB index indication information is used to indicate IRB indexes mapped by the corresponding resource pool in each LBT sub-band.

In a possible implementation, the determining unit is further configured to: determine to map one resource pool to N3 IRB indexes in a plurality of LBT sub-bands, in which N3 is an integer greater than M, and the one resource pool is mapped to IRB indexes with different serial numbers in each LBT sub-band.

In a possible implementation, the configuration information of each resource pool includes indication information, in which the indication information is used to indicate logical numbers where IRB indexes mapped by the corresponding resource pool are located; or the configuration information of each resource pool includes sub-band indication information and IRB index indication information, in which the sub-band indication information is used to indicate a plurality of LBT sub-bands mapped by the corresponding resource pool, and the IRB index indication information is used to indicate IRB indexes mapped by the corresponding resource pool to each LBT sub-band.

According to a fourth aspect of embodiments of the disclosure, a communication device is provided. The communication device has the ability to implement part or all of the functions of the network device in the method described in the second aspect. For example, the communication device may have the functions of some or all of the embodiments of the disclosure, or may have the function of independently implementing any embodiment of the disclosure. The functions can be implemented by hardware, or can be implemented by executing corresponding software using the hardware. The hardware or software includes one or more units or modules corresponding to the above functions.

In an implementation, the communication device includes: a transceiver module and a processing module. The processing module is configured to support the communication device to perform corresponding functions in the above methods. The transceiver module is configured to support communication between the communication device and other devices. The communication device may further include a storage module coupled to the transceiver module and the processing module, which is configured to store necessary computer programs and data for the communication device.

As an example, the processing module may be a processor. The transceiver module may be a transceiver or a communication interface. The storage module may be a memory.

In an implementation, the transceiver module is configured to receive resource pool configuration information sent by a network device, in which the resource pool configuration information indicates a number of and positions of IRB indexes configured for the corresponding resource pool, and two consecutive IRBs in the same IRB index are separated by M resource blocks, M being determined by a size of a subcarrier interval.

According to a fifth aspect of embodiments of the disclosure, a communication device is provided. The communication device includes: a processor. When the processor calls computer programs stored in a memory, the method described in the first aspect above is implemented.

According to a sixth aspect of embodiments of the disclosure, a communication device is provided. The communication device includes: a processor. When the processor calls computer programs stored in a memory, the method described in the second aspect above is implemented.

According to a seventh aspect of embodiments of the disclosure, a communication device is provided. The communication device includes: a processor and a memory having computer programs stored thereon. When the processor executes the computer programs stored in the memory, the communication device is caused to implement the method described in the first aspect above.

According to an eighth aspect of embodiments of the disclosure, a communication device is provided. The communication device includes: a processor and a memory having computer programs stored thereon. When the processor executes the computer programs stored in the memory, the communication device is caused to implement the method described in the second aspect above.

According to a ninth aspect of embodiments of the disclosure, a communication device is provided. The communication device includes: a processor and an interface circuit. The interface circuit is configured to receive code instructions and transmit them to the processor. The processor is configured to run the code instructions to perform the method described in the first aspect above.

According to a tenth aspect of embodiments of the disclosure, a communication device is provided. The communication device includes: a processor and an interface circuit. The interface circuit is configured to receive code instructions and transmit them to the processor. The processor is configured to run the code instructions to perform the method described in the second aspect above.

According to an eleventh aspect of embodiments of the disclosure, a resource configuration system is provided. The system includes the communication device of the third aspect and the communication device of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

According to a twelfth aspect of embodiments of the disclosure, a computer-readable storage medium for storing instructions used by the above terminal device is provided. When the instructions are executed, the terminal device is caused to implement the method of the first aspect.

According to a thirteenth aspect of embodiments of the disclosure, a readable storage medium for storing instructions used by the above network device is provided. When the instructions are executed, the network device is caused to implement the method of the second aspect.

According to a fourteenth aspect of embodiments of the disclosure, a computer program product including computer programs is provided. When the computer programs are run by a computer, the computer is caused to implement the method of the first aspect.

According to a fifteenth aspect of embodiments of the disclosure, a computer program product including computer programs is provided. When the computer programs are run by a computer, the computer is caused to implement the method of the second aspect.

According to a sixteenth aspect of embodiments of the disclosure, a chip system is provided. The chip system includes at least one processor and an interface, for supporting the network device in realizing the functions involved in the first aspect, e.g., determining or processing at least one of data and information involved in the method described above. In a possible design, the chip system further includes a memory, which is configured to store necessary computer programs and data for the network device. The chip system may consist of chips or may include a chip and other discrete devices.

According to a seventeenth aspect of embodiments of the disclosure, a chip system is provided. The chip system includes at least one processor and an interface, for supporting the terminal device in realizing the functions involved in the second aspect, e.g., determining or processing at least one of data and information involved in the method described above. In a possible design, the chip system further includes a memory, which is configured to store necessary computer programs and data for the terminal device. The chip system may consist of chips or may include a chip and other discrete devices.

According to an eighteenth aspect of embodiments of the disclosure, a computer program is provided. When the computer program runs on a computer, the computer is caused to implement the method of the first aspect.

According to a nineteenth aspect of embodiments of the disclosure, a computer program is provided. When the computer program runs on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments of the disclosure or the background technologies is given below.
FIG. 1 is a schematic diagram of a communication system provided by an embodiment of the disclosure.
FIG. 2 is a flowchart of a resource configuration method provided by an embodiment of the disclosure.
FIG. 3 is a schematic diagram of a first example of an interlaced resource block provided by an embodiment of the disclosure.
FIG. 4 is a schematic diagram of a second example of an interlaced resource block provided by an embodiment of the disclosure.
FIG. 5 is a flowchart of another resource configuration method provided by an embodiment of the disclosure.
FIG. 6 is a schematic diagram of mapping a resource pool to an interlaced resource block index of an embodiment of the disclosure.
FIG. 7 is a flowchart of yet another resource configuration method provided by an embodiment of the disclosure.
FIG. 8 is a schematic diagram of a communication device provided by an embodiment of the disclosure.
FIG. 9 is a schematic diagram of another communication device provided by an embodiment of the disclosure.

### DETAILED DESCRIPTION

The embodiments of the disclosure are described in detail below, examples of which are shown in the accompanying drawings, in which the same or similar numbers represent the same or similar elements or elements with the same or similar functions. The embodiments described below with reference to the drawings are exemplary and are intended to explain the disclosure, and should not be construed as limiting the disclosure. In the description of the disclosure, unless otherwise stated, the character "/" means or, for example, A/B means A or B. The term "and/or" in the disclosure describes a relation of associated objects, which indicates three relations, for example, "A and/or B" indicates that A exists alone, A and B both exist, and B exists alone.

Currently, with the continuous emergence of various new services and new application demands, direct communication (also called sidelink (SL)) between terminals may have higher and higher performance requirements on transmission width, communication speed range, communication delay, reliability, scalability, etc. If only depends on the operators' limited licensed spectrum, it may not be able to meet demands of future diversified application scenarios. Therefore, it is necessary to study SL-unlicensed (SL-U) technology.

On an unlicensed frequency band, Occupied Channel Bandwidth (OCB, occupied bandwidth for transmitting signals on unlicensed spectrum) requirement needs to be met, i.e., each transmission needs to occupy 80% of the bandwidth (e.g., 20MHz) of each Listen before Talk (LBT) sub-band. For the SL-U system, there are two resource allocation modes.

The first mode is to allocate resources directly using the Interlaced Resource Block (IRB) as the granularity. In order to meet the OCB requirement, it is necessary to design a mapping relation between the resource pool and the IRB index.

The second mode is to allocate resources using the sub-channel as the granularity. The resource pool needs to be defined on a LBT sub-band. The mapping relation between the resource pool and the IRB index is designed, and mapping the sub-channels to the IRB indexes is determined among the IRB indexes mapped by the resource pools. Therefore, in order to meet the OCB requirement, it is necessary to design the mapping of resource pools to IRB indexes to implement resource configuration of resource pools. However, regardless of whether the first or second resource allocation mode is applied to the SL-U system, there is currently a lack of effective means for configuring resource pools on the LBT sub-band in the SL-U system.

Therefore, the disclosure proposes a resource configuration method and device, which can be applied to an SL-U system. By providing a mapping mode between the resource pool and the IRB index, resource configuration of resource pools can be realized, so that the OCB requirement can be met on the SL-U frequency band on the terminal side, and demands of future diversified application scenarios can be met.

In order to better understand a resource configuration method and device disclosed in the embodiments of the disclosure, a communication system used in the embodiments of the disclosure is first described below.

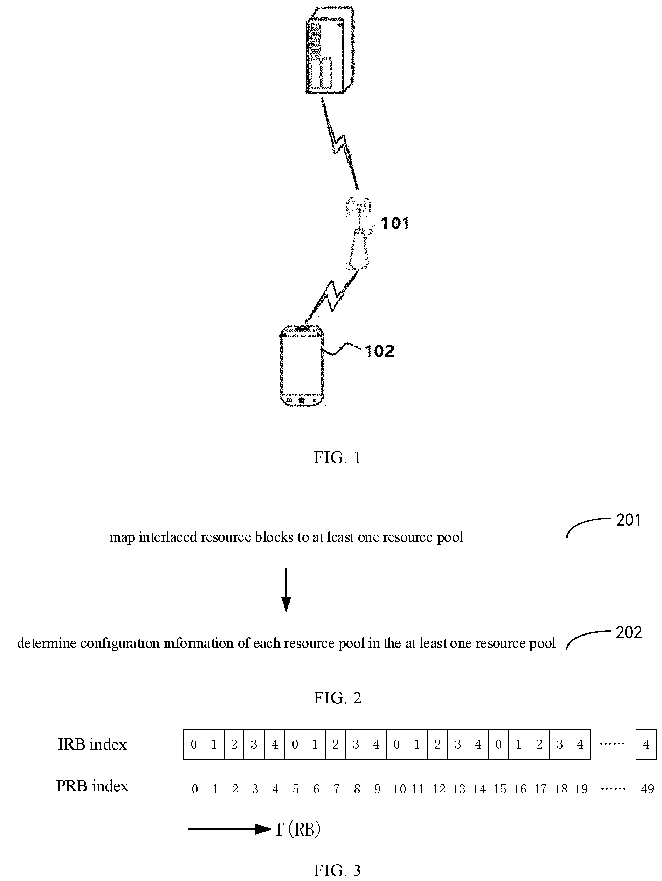

FIG. 1 is a structural diagram of a communication system provided by an embodiment of the disclosure. The communication system may include, but is not limited to, a network device and a terminal device. The number and the form of devices illustrated in FIG. 1 are only for examples and do not constitute a limitation on the embodiments of the disclosure, and two or more network devices and two or more terminal devices may be included in practical applications. The communication system illustrated in FIG. 1 includes, for example, one network device 101 and one terminal device 102.

It should be noted that the technical solutions of the embodiments of the disclosure can be applied to various communication systems, such as, a long term evolution (LTE) system, a 5th generation (5G) mobile communication system, a 5G new radio (NR) system, a SL-U system, or other future new mobile communication systems.

The network device 101 in the embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device according to the embodiments of the disclosure may be composed of a central unit (CU) and a distributed unit (DU). The CU may also be called control unit. The use of CU-DU structure allows to divide a protocol layer of the network device, such as a base station, such that some of the functions of the protocol layer are placed in the CU for centralized control, and some or all of the remaining functions of the protocol layer are distributed in the DU, and the DU is centrally controlled by the CU.

The terminal device in the embodiments of the disclosure is an entity on a user side for receiving or transmitting signals, such as a cellular phone. The first terminal device and the second terminal device may also be referred to as terminal device, user equipment (UE), mobile station (MS), mobile terminal (MT), and the like. The terminal device can be a car with communication functions, a smart car, a mobile phone, a wearable devices, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in the embodiments of the disclosure.

It could be understood that the communication system described in the embodiments of the disclosure is intended to clearly illustrate the technical solutions according to the embodiments of the disclosure, and does not constitute a limitation on the technical solutions according to the embodiments of the disclosure. It could be understood by those skilled in the art that as system architectures evolve and new business scenarios emerge, the technical solutions according to the embodiments of the disclosure are also applicable to similar technical problems.

Resource configuration methods and communication devices provided in the disclosure are described in detail below in combination with the accompanying drawings.

As illustrated in FIG. 2, FIG. 2 is a flowchart of a resource configuration method provided by an embodiment of the disclosure. It is noted that the resource configuration method of the embodiments of the disclosure may be applied to a SL-U frequency band system, which may be performed by a network device. As illustrated in FIG. 2, the resource configuration method may include, but is not limited to, the following steps.

At step 201, IRBs are mapped to at least one resource pool.

In an embodiment of the disclosure, configuration information of each resource pool indicates a number of and positions of IRB indexes configured for the corresponding resource pool, and two consecutive IRBs in the same IRB index are separated by M resource blocks, M being determined by a size of subcarrier spacing.

It should be noted that IRBs are introduced in a NR-U system, which means that two consecutive IRBs are separated by M resource blocks. For an IRB index m, physical resource block (PRBs) included are {*m*,*M+m*,2*M+ m,3M+m,...},* in which *m* ∈ {0,1,...,*M*-1} . In the NR-U system, the IRB structure is defined for two subcarrier spacings, 15kHz and 30kHz, respectively, as shown in the following table.

**Table 4.4.4.6-1: Number of IRBs**

| *µ* | *M* |
|---|---|
| 0 | 10 |
| 1 | 5 |

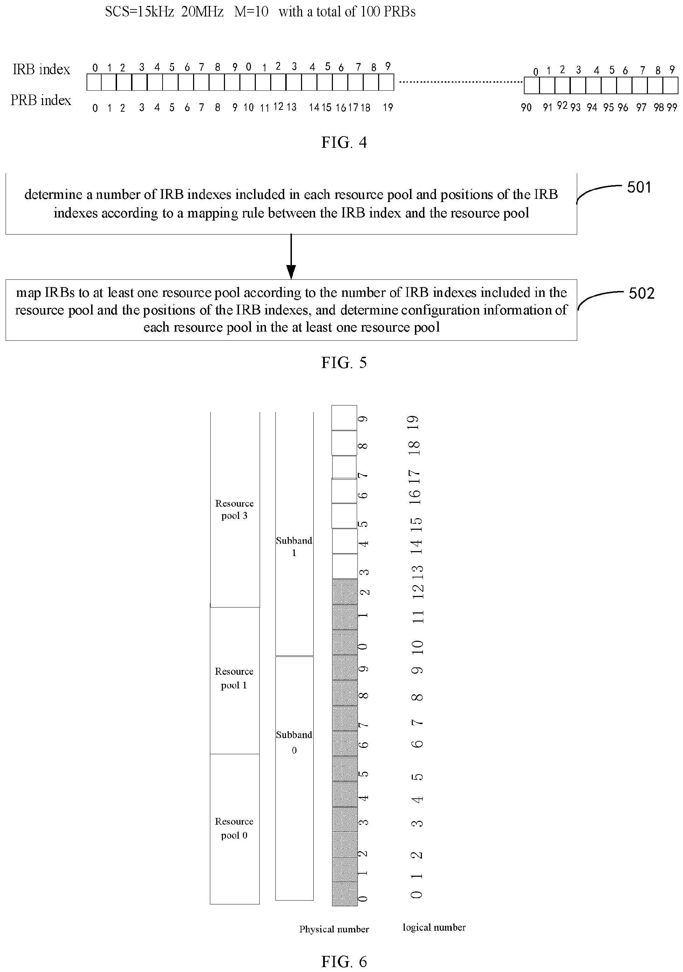

For example, as illustrated in FIG. 3, if the subcarrier spacing (SCS)=30khz, and M=5, there are a total of 5 IRB indexes, for one IRB index (e.g., IRB index 0), the IRBs included in the IRB index are PRBs {0,5,10,15,20,25,30,35,40,45}. As another example, as illustrated in FIG. 4, if SCS=15khz, and M=10, there are a total of 10 IRB indexes and a total of 100 PRBs, for one IRB index (e.g., IRB index 0), the IRBs included in the IRB index are PRBs {0,10,20,30,40,50,60,70,80,90}. The disclosure continues to introduce IRBs, and by introducing the IRBs, the overhead of frequency domain resources indicated for configuration in the SL-U system can be reduced.

In this embodiment of the disclosure, the network device may map IRBs in the system to one or more resource pools when configuring resource pools. As an example, the network device may map IRBs to one or more resource pools based on a mapping rule between resource pools and IRB indexes. The mapping rule may be specified by a protocol.

At step 202, configuration information of each resource pool in the at least one resource pool is determined.

In this embodiment of the disclosure, when configuring the resource pool, the network device may map IRBs in the system to one or more resource pools, that is, the IRBs of the system may allocated to one or more resource pools to generate resource pool configuration information of the system. The resource pool configuration information includes the configuration information of each resource pool. The configuration information of each resource pool indicates a number of and positions of IRB indexes configured for the corresponding resource pool, thereby realizing resource configuration of resource pools. Optionally, each resource pool has a unique resource pool index number, which is used to indicate the use of IRBs included in the corresponding resource pool to carry control information and/or data information of the terminal device.

By implementing the embodiments of the disclosure, the IRBs are allocated to one or more resource pools to generate the configuration information of each resource pool. The configuration information of each resource pool indicates a number of and positions of IRB indexes configured for the corresponding resource pool. It can be seen that by providing a mapping mode between the resource pool and the IRB index, the disclosure can realize resource configuration of resource pools, so that the OCB requirement can be met on the SL-U frequency band, and demands of future diversified application scenarios can be met.

In order to realize the above embodiments, the disclosure also provides another resource configuration method. In some embodiments of the disclosure, as shown in FIG. 5, the resource configuration method may include, but is not limited to, the following steps.

At step 501, a number of IRB indexes included in each resource pool and positions of the IRB indexes are determined according to a mapping rule between the IRB index and the resource pool.

It is understood that, in the embodiments of the disclosure, the mapping rule between the resource pool and the IRB index may be agreed upon by a protocol. For example, the mapping rule between the resource pool and the IRB index may be defined in a protocol. Therefore, the number of IRB indexes included in each resource pool and positions of the IRB indexes are determined according to the mapping rule between the IRB index and the resource pool. Through the mapping rule, the resource pool configuration information configured by the network device can be determined.

At step 502, IRBs are mapped to at least one resource pool according to the number of IRB indexes included in the resource pool and the positions of the IRB indexes, and configuration information of each resource pool in the at least one resource pool is determined.

That is, the IRBs of the system can be mapped to at least one resource pool according to the number of IRB indexes included in each resource pool and the positions of the IRB indexes, so that the configuration information of each resource pool configured by the network device can be determined, which indicates the number of IRB indexes configured for the corresponding resource pool and positions of the IRB indexes.

It is noted that in the embodiments of the disclosure, one resource pool may be mapped to one LBT sub-band or multiple LBT sub-bands. Different mapping modes correspond to different mapping rules. The mapping rules between the resource pool and the IRB index are described below in combination with the embodiments from the perspective of different cases in which the one resource pool is mapped to one LBT sub-band, or one resource pool is mapped to multiple LBT sub-bands, respectively.

The case where one resource pool is mapped to one LBT sub-band.

In an implementation, the mapping rule between the resource pool and the IRB index is: mapping one resource pool to N1 consecutive or non-consecutive IRB indexes in one LBT sub-band, in which N1 is a positive integer less than or equal to M.

That is, when one resource pool is mapped to one LBT sub-band, the one resource pool can mapped to N1 consecutive or non-consecutive IRB indexes in the one LBT sub-band, 1≤N1≤M.

Optionally, mapping one resource pool to the N1 consecutive or non-consecutive IRB indexes in one LBT sub-band, includes: starting from the first IRB index in one LBT sub-band, mapping N1 consecutive or non-consecutive IRB indexes to corresponding resource pools one by one according to logical numbers where the IRB indexes are located, in which N1 is less than M.

For example, if 1 ≤ N1<M, when mapping the IRB indexes to the resource pools, starting from the first IRB index in one LBT sub-band, N1 consecutive or non-consecutive IRB indexes are mapped to corresponding resource pools one by one according to logical numbers where the IRB indexes are located. For example, when mapping the IRB indexes to the resource pools, starting from an IRB index with the serial number of 0 in the LBT sub-band, N1 consecutive or non-consecutive IRB indexes are mapped to corresponding resource pools one by one according to logical numbers where the IRB indexes are located.

As an example, if SCS=15khz in the LBT sub-band, M=10, N1=8, and N1<M, the mapping rule between the resource pool and the IRB index is: mapping one resource pool to 8 consecutive or non-consecutive IRB indexes in one LBT sub-band. For example, one resource pool is mapped to IRB indexes with the serial numbers 0-7 in one LBT sub-band, i.e., the resource pool is mapped to 8 consecutive IRB indexes in the LBT sub-band. For another example, one resource pool is mapped to 8 non-consecutive IRB indexes in one LBT sub-band, e.g., the 8 non-consecutive IRB indexes are indexes with the serial numbers 0, 1, 2, 3, 5, 6, 7, and 8. For example, for two resource pools (including a resource pool 0 and a resource pool 1), the resource pool 0 is mapped to the IRB indexes with the serial numbers 0-7 in the first LBT sub-band (e.g., sub-band 0), and the resource pool 1 is mapped to the IRB indexes with the serial numbers 0-7 in the second LBT sub-band (e.g., sub-band 1), i.e., one resource pool is mapped to N1 consecutive IRB indexes in one LBT sub-band.

In this embodiment, when mapping the resource pool to the IRB indexes according to the mapping rule between the resource pool and the IRB index, a bitmap is used for indicating. In an implementation, the configuration information of each resource pool is in the form of a bitmap of length M. Each bit in the bitmap corresponds to one IRB index, a bit value 1 in the bitmap is used to indicate mapping to a corresponding resource pool, and a bit value 0 in the bitmap is used to indicate not mapping to the corresponding resource pool.

For example, a bitmap is used to indicate 10 IRB indexes in one LBT sub-band, and each bit in the bitmap corresponds to one IRB index. A bit value 1 in the bitmap indicates that an IRB index corresponding to this bit is mapped to the resource pool, and a bit value 0 in the bitmap indicates that an IRB index corresponding to this bit is not mapped to the resource pool. It should be noted that the lowest bit of the bitmap corresponds to the IRB index with the serial number 0 in the LBT sub-band. For example, if one resource pool is mapped to 5 non-consecutive IRB indexes in one LBT sub-band, and the bitmap is 01010101010101, it means that the resource pool is mapped to the IRB indexes 1, 3, 5, 7, and 9.

In this embodiment, in the case where the resource pool is mapped to consecutive IRB indexes, the indication information may be used to indicate the indexes, which indicates a starting IRB index and a number of consecutive IRB indexes. In an implementation, the mapping rule between the IRB index and the resource pool is: mapping a resource pool to N1 consecutive IRB indexes in a LBT sub-band, in which the configuration information of each resource pool includes indication information that indicates a starting IRB index and a number of consecutive IRB indexes configured for the corresponding resource pool.

That is, in the case where the mapping rule between the IRB index and the resource pool is that mapping one resource pool to N1 consecutive IRB indexes in one LBT sub-band, the resource pool configuration information configured by the network device may include indication information for indicating a starting IRB index and a number of consecutive IRB indexes configured for the corresponding resource pool. Therefore, the indication mode enables the indication of resource pool configuration.

In an implementation, one resource pool includes X sub-channels, X being a positive integer, and mapping one resource pool to the N1 consecutive or non-consecutive IRB indexes in one LBT sub-band includes: mapping the X sub-channels in one resource pool to the N1 IRB indexes, in which the mapping rule between the sub-channel and the IRB index is: starting from the first IRB index mapped by one resource pool, mapping N1 IRB indexes to sub-channels in the resource pool according to logical numbers where the IRB indexes are located.

For example, in the case where one resource pool is mapped to only a portion of the IRB indexes in one LBT sub-band, mapping the X sub-channels in the resource pool to the IRB indexes is mapping the X sub-channels to N1 IRB indexes, including, starting from the first IRB index mapped by the resource pool, mapping the IRB indexes to sub-channels in the resource pool according to logical numbers where the IRB indexes are located. As an example, one resource pool includes 2 sub-channels (including a sub-channel 0 and a sub-channel 1), the 2 sub-channels are mapped to 12 IRB indexes. Starting from the IRB index with the serial number 0 (e.g., IRB index 0) among the 12 IRB indexes in the first LBT sub-band, according to the logical numbers where the IRB indexes are located, the sub-channel 0 is mapped to IRB indexes with logical numbers 0-5, and the sub-channel 1 is mapped to IRB indexes with logical numbers 6-11.

Optionally, mapping one resource pool to the N1 consecutive or non-consecutive IRB indexes in one LBT sub-band, includes: mapping one resource pool to M IRB indexes in one LBT sub-band, in which N1 is equal to M. That is, in the case where N1 is equal to M, when mapping the resource pool to the IRB indexes, one resource pool is mapped to all the M IRB indexes in one LBT sub-band.

In an implementation, the mapping rule between the IRB index and the resource pool is: mapping a resource pool to N2 consecutive or non-consecutive IRB indexes in a LBT sub-band, in which N2 is a non-integer greater than 1 and less than M.

It should be noted that, optionally, when mapping the resource pool, starting from the first IRB index in the LBT sub-band, the N2 consecutive or non-consecutive IRB indexes are mapped one by one to corresponding resource pools according to logical numbers where the IRB indexes are located, in which the N2 IRB indexes include: the first IRB index to the Lth IRB index, and l IRBs in the (L+1)^{th} IRB index, L being an integer obtained by downward rounding N2, and a value of *l* being based on a relation between a fractional part of N2 and M. For example, if M = 10 and N2 = 2.5, the value of *l* can be determined to be 5. If M = 5 and N2 = 2.5, the value of *l* can be determined to be 2. If M = 10 and N2 = 2.3, the value of *l* can be determined to be 3.

For example, when mapping the resource pool, starting from the first IRB index (e.g., the IRB index with the serial number 0) in the first LBT sub-band, the N2 consecutive or non-consecutive IRB indexes are mapped one by one to corresponding resource pools according to logical numbers where the IRB indexes are located. For example, N2=2.5, one resource pool is mapped to 2.5 consecutive IRB indexes, such as IRB indexes 0, 1, and 2, and thus one resource pool is mapped to the IRB index with the serial number 0, the IRB index with the serial number 1, and a portion of the IRB index with the serial number 2. For example, on the IRB index with the serial number 2, the resource pool is only mapped to 5 IRBs in the IRB index with the serial number 2. The 5 IRBs may be the first 5 IRBs in the IRB index with the serial number 2, or the 5 IRBs may also be 5 odd-numbered IRBs in the IRB index with the serial number 2, or the 5 IRBs may be 5 even-numbered IRBs in the IRB index with the serial number 2, which may be decided according to the actual application and is not specifically limited herein.

In an implementation, one resource pool includes X sub-channels, X being a positive integer, and mapping one resource pool to the N2 consecutive or non-consecutive IRB indexes in one LBT sub-band, includes: mapping X sub-channels in the resource pool to the N2 IRB indexes, in which the mapping rule between the sub-channel and the IRB index is: starting from the first IRB index mapped by the one resource pool, mapping N2 IRB indexes to sub-channels in the resource pool according to logical numbers where the IRB indexes are located.

For example, in the case where one resource pool is mapped to only N2 IRB indexes in a portion of one LBT sub-band, mapping the X sub-channels in the resource pool to the IRB indexes is mapping X sub-channels to the N2 IRB indexes, including, starting from the first IRB index mapped by the resource pool, mapping N2 IRB indexes to sub-channels in the resource pool according to logical numbers where the IRB indexes are located.

As an example, one resource pool includes 2 sub-channels, and the 2 sub-channels are mapped to 12.5 IRB indexes. Starting from the IRB index with the serial number 0 (e.g., IRB index 0) in the first LBT sub-band, the 12.5 IRB indexes are mapped according to the logical numbers of the IRB indexes where the IRB indexes are located. The sub-channel 0 is mapped to IRB indexes with logical numbers 0-5, and the sub-channel 1 is mapped to IRB indexes with logical numbers 6-11, and the sub-channel 1 is also mapped to 5 IRBs the IRB index with the logical number 12.

The case where one resource pool is mapped to multiple LBT sub-bands.

In an implementation, the mapping rule between the IRB index and the resource pool is: mapping one resource pool to N3 IRB indexes in a plurality of LBT sub-bands, in which N3 is an integer greater than M, and the resource pool is consecutively or non-consecutively mapped to IRB indexes with the same serial numbers in each LBT sub-band.

For example, one resource pool is mapped to N IRB indexes, and the resource pool is mapped to IRB indexes with the same serial numbers in each LBT sub-band either consecutively or non-consecutively. As an example, one resource pool needs to be mapped to 16 IRB indexes, e.g., the resource pool may be mapped to 8 IRB indexes with the serial numbers 0-7 in a sub-band 0, and then continue to be mapped to 8 IRB indexes with the serial numbers 0-7 in a sub-band 1.

Optionally, the configuration information of each resource pool includes sub-band indication information and IRB index indication information, the sub-band indication information is used to indicate a plurality of LBT sub-bands mapped by the corresponding resource pool, and the IRB index indication information is used to indicate IRB indexes mapped by the corresponding resource pool in each LBT sub-band. That is, the mapping rule between the resource pool and the IRB index is that when mapping one resource pool to IRB indexes with the same serial numbers in each LBT sub-band consecutively or non-consecutively, the configuration information of the resource pool configured by the network device may include sub-band indication information and IRB index indication information. The sub-band indication information and the IRB index indication information may be encoded independently or jointly encoded.

In an implementation, the mapping rule between the resource pool and the IRB index is mapping one resource pool to N3 IRB indexes in a plurality of LBT sub-bands, in which N3 is an integer greater than M, and the resource pool is mapped to IRB indexes with different serial numbers in each LBT sub-band.

That is, one resource pool can be mapped to N3 IRB indexes in multiple LBT sub-bands. The resource pool is mapped to IRB indexes with different serial numbers in each LBT sub-band, which is configured independently for each LBT sub-band. The configuration method includes the following two methods.

In the first method, one resource pool is mapped to N3 IRB indexes, the IRBs in the sub-band are numbered according to their frequency positions. For example, the IRBs in the sub-band 0 with the lowest starting frequency are provided with the physical numbers 0-9 and logical numbers 0-9, and the IRBs in the sub-band 1 with the next lowest frequency are provided with the physical numbers 0-9 and logical numbers 10-19, and so on. During (pre)configuration, the logical numbers of the IRBs that are mapped by the resource pool are indicated. Based on the configuration mode, the configuration information of the resource pool configured by the network device may include indication information for indicating the logical numbers where the IRB indexes mapped by the corresponding resource pool are located.

For example, as shown in FIG. 6, N3=12, one resource pool is mapped to 12 IRB indexes. The resource pool 0 is mapped to the IRB indexes with the serial numbers 0-9 in the first LBT sub-band (e.g., sub-band 0 in FIG. 6), and then to 2 IRB indexes with the logical numbers 10-11 in the second LBT sub-band (e.g., sub-band 1 in FIG. 6), i.e., 2 IRB indexes with the physical numbers 0-1 in the second LBT sub-band.

In the second method, the sub-band mapped by the resource pool is first indicated, and then the IRB indexes mapped by the resource pool in the corresponding sub-band are indicated. In this example, the configuration information of each resource pool includes sub-band indication information and IRB index indication information. The sub-band indication information is used to indicate a plurality of LBT sub-bands mapped by the corresponding resource pool, and the IRB index indication information is used to indicate IRB indexes mapped by the corresponding resource pool in each LBT sub-band.

That is, when one resource pool is mapped to the IRB indexes with different serial numbers in each LBT sub-band, two indication fields can be used to indicate a number of and positions of IRB indexes configured by the corresponding resource pool. For example, the configuration information of each resource pool includes the sub-band indication information and the IRB index indication information. The sub-band indication information is used to indicate a plurality of LBT sub-bands mapped by the corresponding resource pool, and the IRB index indication information is used to indicate IRB indexes mapped by the corresponding resource pool in each LBT sub-band.

It should be noted that in some embodiments of the disclosure, the network device sends the resource pool configuration information of the multiple resource pools mapped to the IRBs in the system to the terminal device of the system in a certain way. The resource pool configuration information configured by the network device is public information and should be commonly known for all available terminal devices, which may be indicated through predefinition of system, system broadcast message, or high-level signaling, such as wireless resource control message. The network device or the terminal device with permission to send resource pool configuration information may indicate the adopted resource pool configuration through an appropriate signaling.

By implementing the embodiments of the disclosure, the resource pools are configured via the mapping rule between the resource pool and the IRB index predefined by the system. The number of IRB indexes included in one resource pool and the positions of the IRB indexes can be determined, so that the resource pools can be configured using this mapping rule, and thus the OCB requirement can be met on the SL-U frequency band, and demands of future diversified application scenarios can be met.

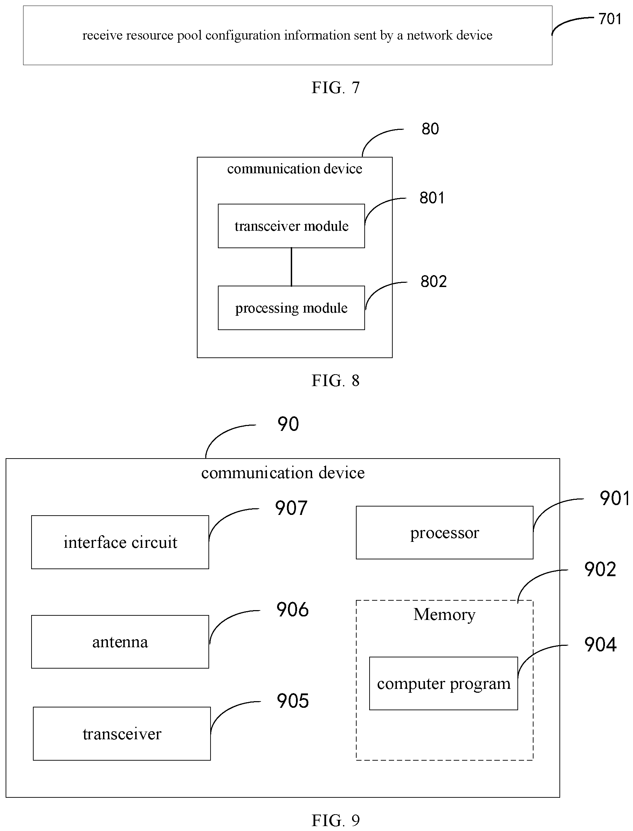

It could be understood that the above embodiments are implementations of the resource configuration method of the embodiments of the disclosure described from the perspective of a network device side. The embodiments of the disclosure also provides a resource configuration method, and the implementations of the resource configuration method are described from the perspective of a terminal device side. As illustrated in FIG. 7, FIG. 7 is a flowchart of yet another resource configuration method provided by the disclosure. It should be noted that the resource configuration method of the embodiments of the disclosure may be applied to the SL-U frequency band and may be performed by the terminal device. As shown in FIG. 7, the resource configuration method may include, but is not limited to, the following steps.

At step 701, resource pool configuration information sent by a network device is received.

In this embodiment of the disclosure, the resource pool configuration information indicates a number of and positions of IRB indexes configured for the corresponding resource pool, and two consecutive IRBs in the same IRB index are separated by M resource blocks, M being determined by a size of SCS.

The network device sends the resource pool configuration information of the multiple resource pools mapped to the IRBs in the system to the terminal device of the system in a certain way. Optionally, based on the resource pool configuration information, the network device may indicate the scheduled resource pool resources for carrying control information and/or data information of the UE to a transmitter UE and/or a receiver UE through the resource pool index. The UE may also select one or more resource pools for carrying and sending control information and/or data message on the available resource pool resources by itself.

Optionally, in this embodiment of the disclosure, when the terminal device accesses to the network device, the terminal device may receive the resource pool configuration information sent by the network device. According to the resource pool configuration information and the mapping rule between the resource pool and the IRB index, the number of and positions of IRB indexes configured for the resource pools that are scheduled by the terminal device can be determined. The description of the mapping rule between the resource pool and the IRB index can be referred to the above description of the mapping rule in this disclosure and will not be repeated here.

By implementing the embodiments of the disclosure, the OCB requirement can be met in the SL-U frequency band by providing a mapping mode between the resource pool and the IRB index for resource configuration of resource pools, so that demands of future diversified application scenarios can be met.

In the above-described embodiments of the disclosure, the methods provided in the embodiments of the disclosure are described from the perspectives of the network device and the terminal device, respectively. In order to implement each of the above-described functions in the methods provided by the embodiments of the disclosure, the network device and the terminal device may include a hardware structure and/or a software module, and implement each of the above-described functions in the form of a hardware structure, a software module, or a combination of the hardware structure and the software module. A certain function of the above-described functions may be performed in the form of a hardware structure, a software module, or a combination of the hardware structure and the software module.

As illustrated in FIG. 8, FIG. 8 is a schematic diagram of a communication device 80 provided by an embodiment of the disclosure. The communication device 80 shown in FIG. 8 may include a transceiver module 801 and a processing module 802. The transceiver module 801 may include a transmitting module and/or a receiving module. The transmitting module is used to implement a transmitting function, and the receiving module is used to implement a receiving function. The transceiver module 801 may implement the transmitting function and/or the receiving function.

The communication device 80 may be a terminal device, a device in the terminal device, or a device capable of being used together with the terminal device. Alternatively, the communication device 80 may be a network device, a device in the network device, or a device capable of being used together with the network device.

If the communication device 80 is a network device, in the embodiments of the disclosure, the processing module 802 is used to: map IRBs to at least one resource pool, and determine configuration information of each resource pool in the at least one resource pool, in which the configuration information of each resource pool indicates a number of and positions of IRB indexes configured for the corresponding resource pool, and two consecutive IRBs in the same IRB index are separated by M resource blocks, M being determined by a size of SCS.

In an implementation, the processing module 802 includes: a determining unit and a mapping unit. The determining unit is used to determine a number of IRB indexes included in each resource pool and positions of the IRB indexes according to a mapping rule between the IRB index and the resource pool. The mapping unit is used to map the IRBs to at least one resource pool according to the number of IRB indexes included in the resource pool and the positions of the IRB indexes.

In an implementation, the determining unit is used to: map one resource pool to N1 consecutive or non-consecutive IRB indexes in one LBT sub-band according to the mapping rule between the IRB index and the resource pool, in which N1 is a positive integer less than or equal to M. The mapping unit is configured to: map IRBs to at least one resource pool by mapping one resource pool to N1 consecutive or non-consecutive IRBs in one LBT sub-band.

In an implementation, the mapping unit is further configured to: starting from the first IRB index in the LBT sub-band, map N1 consecutive or non-consecutive IRB indexes to corresponding resource pools one by one according to logical numbers where the IRB indexes are located, in which N1 is an integer less than M.

In a possible implementation, the configuration information of each resource pool includes a bitmap of length M, each bit in the bitmap corresponds to one IRB index, a bit value 1 in the bitmap is used to indicate mapping to a corresponding resource pool, and a bit value 0 in the bitmap is used to indicate not mapping to the corresponding resource pool.

In a possible implementation, the determining unit is further configured to: determine to map one resource pool to N1 consecutive IRB indexes in one LBT sub-band, in which the configuration information of each resource pool includes indication information that indicates a starting IRB index and a number of consecutive IRB indexes configured for the corresponding resource pool.

In a possible implementation, one resource pool includes X sub-channels, X being a positive integer. The determining unit is further configured to: determine to map the X sub-channels in the resource pool to the N1 IRB indexes, in which the mapping rule between the sub-channel and the IRB index is: starting from the first IRB index mapped by the resource pool, mapping N1 IRB indexes to sub-channels in the resource pool according to logical numbers where the IRB indexes are located.

In a possible implementation, the determining unit is further configured to: determine to map one resource pool to M IRB indexes in one LBT sub-band, in which N1 is equal to M.

In a possible implementation, the determining unit is further configured to: determine to map one resource pool to N2 consecutive or non-consecutive IRB indexes in one LBT sub-band, in which N2 is a non-integer greater than 1 and less than M.

In a possible implementation, the determining unit is further configured to: starting from the first IRB index in the LBT sub-band, determine to map the N2 consecutive or non-consecutive IRB indexes one by one to corresponding resource pools according to logical numbers where the IRB indexes are located, in which the N2 IRB indexes include: the first IRB index to the Lth IRB index, and l IRBs in the (L+1)^{th} IRB index, L being an integer obtained by downward rounding N2, and a value of *l* being based on a relation between a fractional part of N2 and M.

In a possible implementation, one resource pool includes X sub-channels, X being a positive integer, and the determining unit is further configured to: determine to map X sub-channels in the resource pool to the N2 IRB indexes, in which the mapping rule between the sub-channel and the IRB index is: starting from the first IRB index mapped by the resource pool, mapping N2 IRB indexes to sub-channels in the resource pool according to logical numbers where the IRB indexes are located.

In a possible implementation, the determining unit is further configured to: determine to map one resource pool to N3 IRB indexes in a plurality of LBT sub-bands, in which N3 is an integer greater than M, and one resource pool is consecutively or non-consecutively mapped to IRB indexes with the same serial numbers in each LBT sub-band.

In a possible implementation, the configuration information of each resource pool includes sub-band indication information and IRB index indication information, the sub-band indication information is used to indicate a plurality of LBT sub-bands mapped by the corresponding resource pool, and the IRB index indication information is used to indicate IRB indexes mapped by the corresponding resource pool in each LBT sub-band.

In a possible implementation, the determining unit is further configured to: determine to map one resource pool to N3 IRB indexes in a plurality of LBT sub-bands, in which N3 is an integer greater than M, and the resource pool is mapped to IRB indexes with different serial numbers in each LBT sub-band.

In a possible implementation, the configuration information of each resource pool includes indication information, in which the indication information is used to indicate logical numbers where IRB indexes mapped by the corresponding resource pool are located; or the configuration information of each resource pool includes sub-band indication information and IRB index indication information, in which the sub-band indication information is used to indicate a plurality of LBT sub-bands mapped by the corresponding resource pool, and the IRB index indication information is used to indicate IRB indexes mapped by the corresponding resource pool to each LBT sub-band.

If the communication device 80 is a terminal device, in the embodiments of the disclosure, the transceiver module 801 is used to receive receiving resource pool configuration information sent by a network device, in which the resource pool configuration information indicates a number of and positions of IRB indexes configured for the corresponding resource pool, and two consecutive IRBs in the same IRB index are separated by M resource blocks, M being determined by a size of SCS.

With respect to the device in the above embodiments, the specific manner in which each module performs an operation has been described in detail in the embodiments relating to the method, and will not be described in detail herein.

By implementing the embodiments of the disclosure, the IRBs are allocated to one or more resource pools, and the configuration information of each resource pool is generated. The configuration information of each resource pool indicates the number of and positions of IRB indexes configured for the corresponding resource pool. It can be seen that in the disclosure, by providing the mapping mode between the resource pool and the IRB index for resource configuration of resource pools, the OCB requirement can be met on the SL-U frequency band, and demands of future diversified application scenarios can be met.

As illustrated in FIG. 9, FIG. 9 is a schematic diagram of a communication device 90 provided by an embodiment of the disclosure. The communication device 90 may be a network device or a terminal device, or may be a chip, a chip system or a processor that supports the network device to realize the above-described methods, or may be a chip, a chip system or a processor that supports the terminal device to realize the above-described methods. The device may be used to realize the methods described in the above method embodiments with reference to the description of the above-described method embodiments.

The communication device 90 may include one or more processors 901. The processor 901 may be a general purpose processor or a dedicated processor, e.g., a baseband processor or a central processor. The baseband processor is used for processing communication protocols and communication data. The central processor is used for controlling the communication device (e.g., a base station, a baseband chip, a terminal device, a terminal device chip, a DU, or a CU), executing computer programs, and processing data of the computer programs.

Optionally, the communication device 90 may include one or more memories 902 on which computer programs 904 may be stored. The processor 901 executes the computer programs 904 to cause the communication device 90 to perform the methods described in the above method embodiments. Optionally, the memory 902 may also store data. The communication device 90 and the memory 902 may be provided separately or may be integrated together.

Optionally, the communication device 90 may also include a transceiver 905 and an antenna 906. The transceiver 905 may be referred to as a transceiver unit, a transceiver machine, or a transceiver circuit, for realizing a transceiver function. The transceiver 905 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the communication device 90 may also include one or more interface circuits 907. The interface circuits 907 are used to receive code instructions and transmit them to the processor 901. The processor 901 runs the code instructions to cause the communication device 90 to perform the methods described in the method embodiments.

If the communication device 90 is a network device, the processor 901 is used to perform steps 201 and 202 in FIG. 2, and steps 501 and 502 in FIG. 5.

If the communication device 90 is a terminal device, the transceiver 905 is used to perform step 701 in FIG. 7.

In an implementation, the processor 901 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 901 may store a computer program 903. When the computer program 903 runs on the processor 901, the communication device 90 is caused to perform the methods described in the method embodiments above. The computer program 903 may be solidified in the processor 901, and in such case the processor 901 may be implemented by hardware.

In an implementation, the communication device 90 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal device (e.g., the first terminal device in the preceding method embodiments), but the scope of the communication device described in the disclosure is not limited thereto, and the structure of the communication device may not be limited by FIG. 9. The communication device may be a stand-alone device or may be part of a larger device. For example, the described communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

For the case where the communication device may be a chip or a chip system, the chip includes a processor and an interface. There may be one or more processors and multiple interfaces.

For the case where the chip is used to implement the functions of the network device in the embodiments of the disclosure, the processor is used to: map IRBs to at least one resource pool, and determine configuration information of each resource pool in the at least one resource pool, in which the configuration information of each resource pool indicates a number of and positions of IRB indexes configured for the corresponding resource pool, and two consecutive IRBs in the same IRB index are separated by M resource blocks, M being determined by a size of SCS.

In an implementation, the processor includes: a determining unit and a mapping unit. The determining unit is used to determine a number of IRB indexes included in each resource pool and positions of the IRB indexes according to a mapping rule between the IRB index and the resource pool. The mapping unit is used to map the IRBs to at least one resource pool according to the number of IRB indexes included in the resource pool and the positions of the IRB indexes.

In an implementation, the determining unit is used to: determine to map one resource pool to N1 consecutive or non-consecutive IRB indexes in one LBT sub-band according to the mapping rule between the IRB index and the resource pool, in which N1 is a positive integer less than or equal to M.

The mapping unit is further configured to: map IRBs to at least one resource pool by mapping one resource pool to N1 consecutive or non-consecutive IRB indexes in one LBT sub-band.

In an implementation, the mapping unit is further configured to: starting from the first IRB index in the LBT sub-band, map N1 consecutive or non-consecutive IRB indexes to corresponding resource pools one by one according to logical numbers where the IRB indexes are located, in which N1 is less than M.

In a possible implementation, the configuration information of each resource pool includes a bitmap of length M, each bit in the bitmap corresponds to one IRB index, a bit value 1 in the bitmap is used to indicate mapping to a corresponding resource pool, and a bit value 0 in the bitmap is used to indicate not mapping to the corresponding resource pool.

In a possible implementation, the determining unit is further configured to: determine to map one resource pool to N1 consecutive or non-consecutive IRB indexes in one LBT sub-band, in which the configuration information of each resource pool includes indication information that indicates a starting IRB index and a number of consecutive IRB indexes configured for the corresponding resource pool.

In a possible implementation, one resource pool includes X sub-channels, X being a positive integer, and the determining unit is further configured to: determine to map the X sub-channels to N1 IRB indexes, in which the mapping rule between the sub-channel and the IRB index is: starting from the first IRB index mapped by the resource pool, mapping N1 IRB indexes to sub-channels in the resource pool according to logical numbers where the IRB indexes are located.

In a possible implementation, the determining unit is further configured to: determine to map one resource pool to M IRB indexes in one LBT sub-band, in which N1 is equal to M.

In a possible implementation, the determining unit is further configured to: determine to map one resource pool to N2 consecutive or non-consecutive IRB indexes in one LBT sub-band, in which N2 is a non-integer greater than 1 and less than M.

In a possible implementation, the determining unit is further configured to: starting from the first IRB index in the LBT sub-band, determine to map the N2 consecutive or non-consecutive IRB indexes one by one to corresponding resource pools according to logical numbers where the IRB indexes are located, in which the N2 IRB indexes include: the first IRB index to the Lth IRB index, and l IRBs in the (L+1)^{th} IRB index, L being an integer obtained by downward rounding N2, and a value of *l* being based on a relation between a fractional part of N2 and M.

In a possible implementation, one resource pool includes X sub-channels, X being a positive integer, and the determining unit is further configured to: determine to map X sub-channels in the resource pool to the N2 IRB indexes, in which the mapping rule between the sub-channel and the IRB index is: starting from the first IRB index mapped by the resource pool, mapping N2 IRB indexes to sub-channels in the resource pool according to logical numbers where the IRB indexes are located.

In a possible implementation, the determining unit is further configured to: determine to map one resource pool to N3 IRB indexes in a plurality of LBT sub-bands, in which N3 is an integer greater than M, and each resource pool is consecutively or non-consecutively mapped to IRB indexes with the same serial numbers in each LBT sub-band.

In a possible implementation, the configuration information of each resource pool includes sub-band indication information and IRB index indication information, the sub-band indication information is used to indicate a plurality of LBT sub-bands mapped by the corresponding resource pool, and the IRB index indication information is used to indicate IRB indexes mapped by the corresponding resource pool in each LBT sub-band.

In a possible implementation, the determining unit is further configured to: determine to map one resource pool to N3 IRB indexes in a plurality of LBT sub-bands, in which N3 is an integer greater than M, and the resource pool is mapped to IRB indexes with different serial numbers in each LBT sub-band.

In a possible implementation, the configuration information of each resource pool includes indication information, in which the indication information is used to indicate logical numbers where IRB indexes mapped by the corresponding resource pool are located; or the configuration information of each resource pool includes sub-band indication information and IRB index indication information, in which the sub-band indication information is used to indicate a plurality of LBT sub-bands mapped by the corresponding resource pool, and the IRB index indication information is used to indicate IRB indexes mapped by the corresponding resource pool to each LBT sub-band.

For the case where the chip is used to realize the functions of the terminal device in the embodiments of the disclosure, the interface is used to receive resource pool configuration information sent by a network device, in which the resource pool configuration information indicates a number of and positions of IRB indexes configured for the corresponding resource pool, and two consecutive IRBs in the same IRB index are separated by M resource blocks, M being determined by a size of SCS.

Optionally, the chip further includes a memory used to store necessary computer programs and data.

It can be understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

Embodiments of the disclosure also provide a system. The system includes a communication device as a terminal device and a communication device as a network device in the aforementioned embodiment of FIG. 8, or, the system includes a communication device as a terminal device and a communication device as a network device in the aforementioned embodiment of FIG. 9.

The disclosure also provides a readable storage medium having instructions stored thereon. When the instructions are executed by a computer, the function of any of the above method embodiments can be realized.

The disclosure also provides a computer program product. When the computer program product is executed by a computer, the function of any of the above method embodiments can be realized.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wirelessly (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art can understand that the first, second, and other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A resource configuration method, performed by a network device, comprising:
mapping interlaced resource blocks to at least one resource pool; and
determining configuration information of each resource pool in the at least one resource pool;
wherein the configuration information of each resource pool indicates a number of and positions of interlaced resource block indexes configured for a corresponding resource pool, and two consecutive interlaced resource blocks in the same interlaced resource block index are separated by M resource blocks, M being determined by a size of subcarrier spacing.

2. The method of claim 1, wherein mapping the interlaced resource block to the at least one resource pool comprises:
determining a number of interlaced resource block indexes included in each resource pool and positions of the interlaced resource block indexes according to a mapping rule between the interlaced resource block index and the resource pool; and
mapping the interlaced resource blocks to at least one resource pool according to the number of interlaced resource block indexes included in the resource pool and the positions of the interlaced resource block indexes.

3. The method of claim 2, wherein the mapping rule is:
mapping one resource pool to N1 consecutive or non-consecutive interlaced resource block indexes in one listen-before-talk (LBT) sub-band, wherein N1 is a positive integer less than or equal to M.

4. The method of claim 3, wherein mapping one resource pool to the N1 consecutive or non-consecutive interlaced resource block indexes in one LBT sub-band comprises:
starting from a first interlaced resource block index in the LBT sub-band, mapping N1 consecutive or non-consecutive interlaced resource block (IRB) indexes to corresponding resource pools one by one according to logical numbers where the IRB indexes are located, wherein N1 is an integer less than M.

5. The method of claim 4, wherein the configuration information of each resource pool comprises a bitmap of length M, each bit in the bitmap corresponds to one IRB index, a bit value 1 in the bitmap is used to indicate mapping to a corresponding resource pool, and a bit value 0 in the bitmap is used to indicate not mapping to the corresponding resource pool.

6. The method of claim 4, wherein the mapping rule is: mapping one resource pool to N1 consecutive IRB indexes in one LBT sub-band, where N1 is an integer;
wherein the configuration information of each resource pool comprises indication information that indicates a starting IRB index and a number of consecutive IRB indexes configured for the corresponding resource pool.

7. The method of any one of claims 4-6, wherein the one resource pool comprises X sub-channels, X being a positive integer, and mapping the one resource pool to the N1 consecutive or non-consecutive IRB indexes in one LBT sub-band comprises:
mapping the X sub-channels to the N1 IRB indexes, wherein the mapping rule between the sub-channel and the IRB index is: starting from the first IRB index mapped by the one resource pool, mapping the N1 IRB indexes to sub-channels in the one resource pool according to logical numbers where the IRB indexes are located.

8. The method of claim 3, wherein mapping the one resource pool to the N1 consecutive or non-consecutive IRB indexes in one LBT sub-band comprises:
mapping the one resource pool to M IRB indexes in one LBT sub-band, wherein N1 is equal to M.

9. The method of claim 2, wherein the mapping rule is:
mapping one resource pool to N2 consecutive or non-consecutive IRB indexes in one LBT sub-band, wherein N2 is a non-integer greater than 1 and less than M.

10. The method of claim 9, wherein mapping one resource pool to the N2 consecutive or non-consecutive IRB indexes in one LBT sub-band comprises:
starting from a first IRB index in the one LBT sub-band, mapping the N2 consecutive or non-consecutive IRB indexes one by one to corresponding resource pools according to logical numbers where the IRB indexes are located;
wherein the N2 IRB indexes comprise: the first IRB index to an L^{th} IRB index, and *l* IRBs in an (L+1)^{th} IRB index, L being an integer obtained by downward rounding N2, and a value of *l* being based on a relation between a fractional part of N2 and M.

11. The method of claim 9 or 10, wherein the one resource pool comprises X sub-channels, X being a positive integer, and mapping one resource pool to the N2 consecutive or non-consecutive IRB indexes in one LBT sub-band comprises:
mapping X sub-channels in the one resource pool to the N2 IRB indexes, wherein the mapping rule between the sub-channel and the IRB index is: starting from the first IRB index mapped by the one resource pool, mapping N2 IRB indexes to sub-channels in the one resource pool according to logical numbers where the IRB indexes are located.

12. The method of claim 2, wherein the mapping rule is:
mapping one resource pool to N3 IRB indexes in a plurality of LBT sub-bands, wherein N3 is an integer greater than M, and the one resource pool is consecutively or non-consecutively mapped to IRB indexes with the same serial numbers in each LBT sub-band.

13. The method of claim 12, wherein the configuration information of each resource pool comprises sub-band indication information and IRB index indication information, the sub-band indication information is used to indicate a plurality of LBT sub-bands mapped by the corresponding resource pool, and the IRB index indication information is used to indicate IRB indexes mapped by the corresponding resource pool in each LBT sub-band.

14. The method of claim 2, wherein the mapping rule is:
mapping one resource pool to N3 IRB indexes in a plurality of LBT sub-bands, wherein N3 is an integer greater than M, and the one resource pool is mapped to IRB indexes with different serial numbers in each LBT sub-band.

15. The method of claim 14, wherein
the configuration information of each resource pool comprises indication information, wherein the indication information is used to indicate logical numbers where IRB indexes mapped by the corresponding resource pool are located; or
the configuration information of each resource pool comprises sub-band indication information and IRB index indication information, wherein the sub-band indication information is used to indicate a plurality of LBT sub-bands mapped by the corresponding resource pool, and the IRB index indication information is used to indicate IRB indexes mapped by the corresponding resource pool to each LBT sub-band.

16. A resource configuration method, performed by a terminal device, comprising:
receiving resource pool configuration information sent by a network device;
wherein the resource pool configuration information indicates a number of and positions of interlaced resource block (IRB) indexes configured for a corresponding resource pool, and two consecutive IRBs in the same IRB index are separated by M resource blocks, M being determined by a size of subcarrier interval.

17. A communication device, comprising:
a processing module, configured to map interlaced resource blocks to at least one resource pool, and determine configuration information of each resource pool in the at least one resource pool;
wherein the configuration information of each resource pool indicates a number of and positions of interlaced resource block indexes configured for the corresponding resource pool, and two consecutive interlaced resource blocks in the same interlaced resource block index are separated by M resource blocks, M being determined by a size of subcarrier spacing.

18. A communication device, comprising:
a transceiver module, configured to receive resource pool configuration information sent by a network device;
wherein the resource pool configuration information indicates a number of and positions of interlaced resource block (IRB) indexes configured for a corresponding resource pool, and two consecutive IRBs in the same IRB index are separated by M resource blocks, M being determined by a size of a subcarrier interval.

19. A communication device comprising a processor and a memory having computer programs stored thereon, wherein when the computer programs stored in the memory are executed by the processor, the device is caused to implement the method of any one of claims 1-15.

20. A communication device comprising a processor and a memory having computer programs stored thereon, wherein when the computer programs stored in the memory are executed by the processor, the device is caused to implement the method of claim 16.

21. A computer readable storage medium for storing instructions, wherein when the instructions are executed, the method of any one of claims 1-15 is implemented.

22. A computer readable storage medium for storing instructions, wherein when the instructions are executed, the method of claim 16 is implemented.
